# EUROPÄISCHE PATENTSCHRIFT

(11) **EP 3 953 077 B1**
(45) Veröffentlichungstag und Bekanntmachung des Hinweises auf die Patenterteilung: **18.10.2023**
(21) Anmeldenummer: 20730962.6
(22) Anmeldetag: 10.04.2020
(51) Int. Cl.: B21D 5/00, B21D 5/02, G01B 11/26

(54) **MESSVORRICHTUNG ZUR BESTIMMUNG DES BIEGEWINKELS**
MEASURING DEVICE FOR DETERMINING THE BENDING ANGLE
DISPOSITIF DE MESURE PERMETTANT DE DÉTERMINER L'ANGLE DE PLIAGE

(30) Priorität: 11.04.2019 AT 503312019
(43) Veröffentlichungstag der Anmeldung: 16.02.2022
(73) Patentinhaber: TRUMPF Maschinen Austria GmbH & Co. KG., 4061 Pasching (AT)
(72) Erfinder: SPERRER, Gerhard, 4554 Oberschlierbach (AT)
(74) Vertreter: Burger, Hannes
(86) Internationale Anmeldenummer: PCT/AT2020/060145
(87) Internationale Veröffentlichungsnummer: WO 2020/206479

(56) Entgegenhaltungen:
- WO-A1-2016/058020
- JP-A- S59 197 813
- JP-A- 2013 116 480
- JP-A- 2017 225 983
- US-A- 4 564 765
- US-A- 5 531 087

## Beschreibung

Die Erfindung betrifft eine Biegevorrichtung zur Herstellung eines Bauteils durch Umformung eines Werkstücks aus Blech mit einer Messvorrichtung zur Bestimmung eines Biegewinkels des Werkstücks.

Zur optischen Messung eines Biegewinkels an einem Werkstück während dessen Verformung in einer Biegemaschine sind Messverfahren bzw. Messvorrichtungen bekannt, bei denen ein Lichtmuster auf das umzuformende Blech gelenkt wird und dieses Lichtmuster von einer Bilderfassungsvorrichtung bzw. einer Kamera aufgezeichnet wird. Eine solche Messvorrichtung ist beispielsweise aus der WO 2016/058020 A1 bekannt. Die Beleuchtungsvorrichtung und die Kamera sind dabei in Richtung der Biegeachse voneinander distanziert angeordnet, sodass sich zwischen den auf das Werkstück einfallenden Lichtstrahlen und der Haupterfassungsrichtung bzw. der optischen Achse der Kamera ein Winkel ergibt. Die Beleuchtungsvorrichtung bzw. das Lichtmuster ist derart ausgebildet, dass durch das auf das Werkstück einfallende Licht eine Lichtlinie auf der Werkstückoberfläche erscheint. Durch das Gegeneinanderpressen der Biegewerkzeuge wird an dem Werkstück eine Biegekante ausgebildet und ändert sich dabei dementsprechend auch die räumliche Lage der an die Biegekante anschließenden Teile des Werkstücks. Damit ändert sich gleichzeitig auch die räumliche Lage der auf den Werkstücksteilen erscheinenden Lichtlinien. Und dementsprechend ergibt sich auch eine Änderung der Lage der Lichtlinie in dem Sehfeld der Kamera und in den von der Kamera aufgezeichneten Bildern. Die Verformung des Werkstücks geht also mit einer Änderung der Richtung der Lichtlinie in den Bildern bzw. in dem Sehfeld der Kamera einher. Mit einem entsprechenden Analyse- bzw. Auswerteprogramm der Steuervorrichtung der Biegemaschine können aus diesen Änderungen der Ausrichtung der Lichtlinie in den Bildern der Kamera die Winkeländerungen des entsprechenden Werkstückschenkels bzw. insgesamt der gesamte Biegewinkel an der Biegekante berechnet werden.

Bei der bekannten Biegemaschine ist außerdem eine Geradführung zur Befestigung der Biegewinkel-Messvorrichtung an dem Pressentisch der Biegemaschine vorgesehen. Diese Geradführung ist parallel zur Längserstreckung des Pressentisches bzw. parallel zu der Biegeachse ausgerichtet und kann die Biegewinkelmessvorrichtung damit an unterschiedliche Stellen des Presstisches bzw. des zu biegenden Werkstücks verschoben werden. Nachteilig an der bekannten Lösung ist, dass es im Falle der Bearbeitung von Werkstücken mit einer komplexen Struktur bei manchen Biegevorgängen zu einer Abschattung des Sehfelds der Kamera durch Werkstückteile kommen kann, derart, dass die Laserlinie von der Kamera nicht mehr erfasst werden kann.

Das Dokument JP S59197813 A betrifft eine Methode zur Prüfung von Schweißnähten und zeigt eine Vorrichtung zum Messen der Winkel an den Flanken einer V-Naht. Dabei werden zwei Lichtlinien (8a, 8b) auf das Werkstück im Bereich der Flanken der Schweißnaht projiziert. Die Austrittsöffnungen der Lichtlinien von zwei Lichtquellen sind voneinander distanziert angeordnet, und zwar symmetrisch links und rechts der Linse einer Kamera.

Das Dokument US 5531087 A zeigt eine weitere Biegemaschine mit einer Messvorrichtung für den Biegewinkel mittels zweier Lichtlinien und einer Kamera. Dabei werden zwei Lichtlinien auf das Blech projiziert und zwar durch zwei Lichtquellen, die in einer Richtung parallel zur Biegeachse versetzt angeordnet sind. Eine Kamera ist zwischen den Austrittsöffnungen der Lichtquellen angeordnet und nimmt ein Bild der beiden Lichtlinien auf, aus deren relativer Stellung zueinander der Winkel bestimmet werden kann.

In den Dokumenten US4564765A und JP2017225983A werden Messvorrichtungen für den Biegewinkel mit einer optoelektronischen und im Dokument JP2013116480A eine solche mit einer mechanischen Abtastung der Schenkel des Werkstücks beschrieben.

Es ist die Aufgabe der Erfindung, eine Biegewinkel-Messvorrichtung zu schaffen, die in unterschiedlichen Fällen der Biegebearbeitung von Werkstücken an Biegevorrichtungen flexibel und mit höherer Zuverlässigkeit eingesetzt werden kann.

Die erfindungsgemäße Aufgabe wird gelöst durch eine Biegevorrichtung zur Herstellung eines Bauteils durch Umformung eines Werkstücks aus Blech mit zwei parallel zueinander ausgerichteten Pressbalken und daran befestigten Biegewerkzeugen, mit einer Steuervorrichtung und mit einer Messvorrichtung zur Bestimmung eines Biegewinkels des Werkstücks bezüglich einer Biegeachse, wobei die Messvorrichtung eine Beleuchtungsvorrichtung zur Erzeugung einer Lichtlinie auf dem Werkstück und eine Kamera zum Aufzeichnen eines Bildes der Lichtlinie umfasst. Die Kamera und eine erste Austrittsöffnung der Beleuchtungsvorrichtung sind in Richtung parallel bezüglich der Biegeachse voneinander distanziert angeordnet und die Steuervorrichtung ist mit einem Bilderkennungsprogramm ausgebildet, sodass aus einer Änderung des Bildes der Lichtlinie in Bildern der Kamera ein Wert des Biegewinkels bestimmbar ist. Die Beleuchtungsvorrichtung umfasst eine zweite Austrittsöffnung zur Erzeugung einer zweiten Lichtlinie auf dem Werkstück, wobei die erste Austrittsöffnung und die zweite Austrittsöffnung der Beleuchtungsvorrichtung in Richtung parallel bezüglich der Biegeachse voneinander distanziert angeordnet sind, und wobei die Kamera zwischen der ersten Austrittsöffnung und der zweiten Austrittsöffnung angeordnet ist. Weiters ist vorgesehen, dass die Beleuchtungsvorrichtung eine Lichtquelle und eine Umlenkvorrichtung für Licht der Lichtquelle umfasst und die Umlenkvorrichtung dazu ausgebildet ist, das Licht der Lichtquelle wahlweise durch einen ersten Beleuchtungs-Strahlengang und die erste Austrittsöffnung oder durch einen zweiten Beleuchtungs-Strahlengang und die zweite Austrittsöffnung zu führen. Von Vorteil ist dabei, dass mit einer solchen Messvorrichtung auch bei komplexen Bauteilen, bei denen an Werkstücken mehrere Umformvorgänge ausgeführt werden müssen, Messungen entweder unter Verwendung der ersten Austrittsöffnung oder unter Verwendung der zweiten Austrittsöffnung durchgeführt werden können. Außerdem kann die Messvorrichtung dadurch mit einer geringeren Anzahl von Bauteilen aufgebaut werden. Der aus dem Dokument JP S59197813 A bekannte Stand der Technik bildet im Übrigen die Grundlage für die Präambel des Anspruchs 1.

Vorteilhaft ist auch eine Ausführung, wobei die Messvorrichtung ein Fenster für die Kamera umfasst, wobei die erste Austrittsöffnung und die zweite Austrittsöffnung symmetrisch bezüglich des Fensters angeordnet sind. Die räumliche Geometrie der Anordnung der Lichtlinie auf dem Werkstück und der Richtung des Sehfelds der Kamera kann somit spiegelsymmetrisch gestaltet werden, womit vorteilhafterweise die gleichen Algorithmen zur Bestimmung der Biegewinkel anwendbar sind.

Die Weiterbildung, wonach durch die Austrittsöffnung der Beleuchtungsvorrichtung und die Lichtlinie eine Ebene bestimmt ist, die senkrecht bezüglich der Biegeachse ausgerichtet ist, hat den Vorteil einer einfacheren Auswertung zur Bestimmung der Verformungswinkel.

Durch die Weiterbildung, wonach die Messvorrichtung einen Drehrahmen umfasst, wobei die Umlenkvorrichtung für das Licht der Lichtquelle an dem Drehrahmen befestigt und mit diesem um eine Achse verschwenkbar ist, hat den Vorteil, dass damit eine ausreichend hohe Messgenauigkeit bei der Bestimmung der Biegewinkel erreicht werden kann.

Vorteilhaft ist auch eine Ausführung, wobei die Umlenkvorrichtung einen Planspiegel umfasst oder, wenn die Umlenkvorrichtung ein Prisma umfasst.

Die Ausbildung der Vorrichtung, wonach die Kamera an dem Drehrahmen befestigt und mit diesem um die Achse verschwenkbar ist, wobei die Achse senkrecht bezüglich der Biegeachse ausgerichtet ist, hat den Vorteil, dass zum Wechsel der Messfelder beide Wechsel, d.h. der Wechsel der Ausrichtung der Kamera und der Wechsel zwischen den Beleuchtungsstrahlengängen zu der ersten oder der zweiten Austrittsöffnung, gemeinsam nur durch Betätigen des Drehrahmens durchgeführt werden kann.

Die Weiterbildung der Vorrichtung, wonach ein Umlenkprisma zur Umlenkung des Strahlengangs der Kamera an dem Drehrahmen befestigt ist und die Kamera koaxial zu der Achse des Drehrahmens ausgerichtet ist, hat den Vorteil, dass ein Wechsel zwischen den beiden zur Verfügung stehenden Messfeldern vor den beiden Austrittsöffnungen für die Lichtlinie durch Betätigen eines einzigen Bauteils, nämlich des Drehrahmens, durchgeführt werden kann.

Die Ausbildung, wonach eine Richtung eines Strahlengangs der Kamera und die Ebene der Lichtlinie einen spitzen Winkel einschließen, hat den Vorteil, dass damit eine ausreichend hohe Messempfindlichkeit erreicht werden kann.

Der Vorteil der Weiterbildung, wobei die Kamera ein Weitwinkelobjektiv umfasst und feststehend angeordnet ist, wobei eine Richtung eines Strahlengangs der Kamera parallel zu der Ebene der Lichtlinie ausgerichtet ist, besteht darin, dass eine geringere Fehleranfälligkeit bei der Ausrichtung der Kamera gegeben ist.

Vorteilhaft ist auch die Ausbildung der Biegevorrichtung, wobei eine Geradführung umfasst ist und die Messvorrichtung für den Biegewinkel an der Geradführung in einer Richtung parallel zu der Biegeachse verstellbar ist. Damit sind unter Verwendung ein und derselben Messvorrichtung Messungen an unterschiedlichsten Stellen der Längserstreckung des Tischbalkens und bei unterschiedlichen Biegeumformungen durchführbar.

Zum besseren Verständnis der Erfindung wird diese anhand der nachfolgenden Figuren näher erläutert.

Es zeigen jeweils in stark vereinfachter, schematischer Darstellung:
- Fig. 1: einen Teil einer Biegevorrichtung in einer Seitenansicht;
- Fig. 2: die Biegevorrichtung gemäß Fig. 1, perspektivisch dargestellt;
- Fig. 3: die Biegevorrichtung bei Ausführung einer Biegeumformung in einem alternativen Anwendungsfall, perspektivisch dargestellt;
- Fig. 4: einen Querschnitt der Biegewinkelmessvorrichtung gemäß Fig. 1;
- Fig. 5: ein alternatives Ausführungsbeispiel der Biegewinkelmessvorrichtung der Biegevorrichtung, dargestellt als Querschnitt;
- Fig. 6: ein weiteres alternatives Ausführungsbeispiel der Biegewinkelmessvorrichtung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

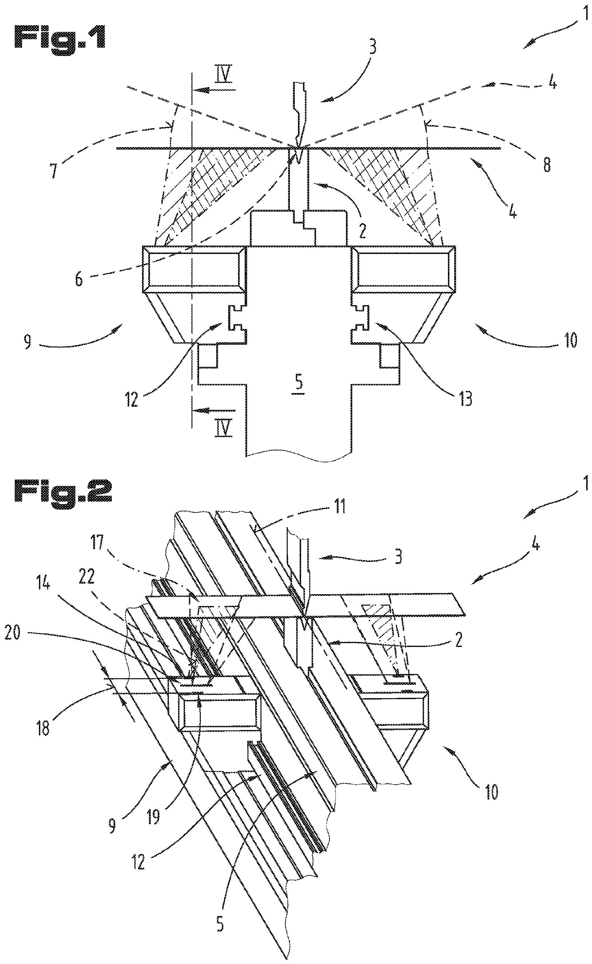

Die Fig. 1 zeigt einen Teil einer Biegevorrichtung 1 anhand einer Seitenansicht auf eine Anordnung von Biegewerkzeugen mit einer Matrize 2 und einem Stempel 3 zum Freibiegen eines zwischen den Biegewerkzeugen eingelegten Werkstücks 4. Die Matrize 2 ist dazu an einem unteren Pressbalken bzw. einem feststehenden Tischbalken 5 befestigt. Durch Andrücken des Stempels 3 gegen das Werkstück 4 wird an diesem eine Biegeumformung bewirkt. Zu beiden Seiten der durch die Matrize 2 und den Stempel 3 gebildeten Biegewerkzeuganordnung steht jeweils ein Schenkel des Werkstücks 4 seitlich ab und werden diese Schenkel unter Ausbildung einer Biegekante 6 um einen Winkel 7, 8 nach oben verschwenkt, wie an dem in Fig. 1 strichliert eingezeichneten Werkstück 4 zu erkennen ist. Zur Bestimmung von Werten der Biegewinkel 7, 8 bezüglich einer der Biegekante 6 entsprechenden Biegeachse der entsprechenden Schenkel des Werkstücks 4 sind zu beiden Seiten des Tischbalkens 5 jeweils eine Biegewinkel-Messvorrichtung 9, 10 an dem Tischbalken 5 befestigt. Mit den Biegewinkel-Messvorrichtungen 9, 10 können die Verformungswinkel 7, 8 berührungslos und auf Grundlage optischer bzw. geometrischer Gesetzmäßigkeiten bestimmt werden.

Nur der Vollständigkeit halber sei an dieser Stelle angemerkt, dass die Anordnung jeweils einer Biegewinkel-Messvorrichtung 9, 10 zu beiden Seiten des Tischbalkens 5 alleine der Tatsache geschuldet ist, das es sich bei dem beschriebenen Ausführungsbeispiel der Biegevorrichtung 1 um eine solche zum Freibiegen handelt, bei dem die Schenkel des Werkstücks 4 während der Umformung auch zu beiden Seiten in ihrer räumlichen Lage und Ausrichtung verändert werden. Im Falle einer Ausbildung der Biegevorrichtung 1 beispielsweise durch eine Vorrichtung zum Schwenkbiegen, bei der ein Schenkel des Werkstücks 4 in seiner räumlichen Lage festgehalten wird, ist selbstverständlich die Anordnung einer einzigen Biegewinkel-Messvorrichtung 9, 10 ausreichend. Im Übrigen kann auch vorgesehen sein, dass die Biegewinkel-Messvorrichtung 9, 10 in Richtung parallel zur Längserstreckung 11 des Tischbalkens 5 bzw. parallel zu der Anordnung der Biegewerkzeuge verschiebbar ist. Dazu ist an dem Tischbalkens 5 eine Geradführung 12, 13 angeordnet, an der die Biegewinkel-Messvorrichtung 9, 10 an unterschiedlichen Stellen entlang der Längserstreckung 11 fixiert werden kann (Fig. 2).

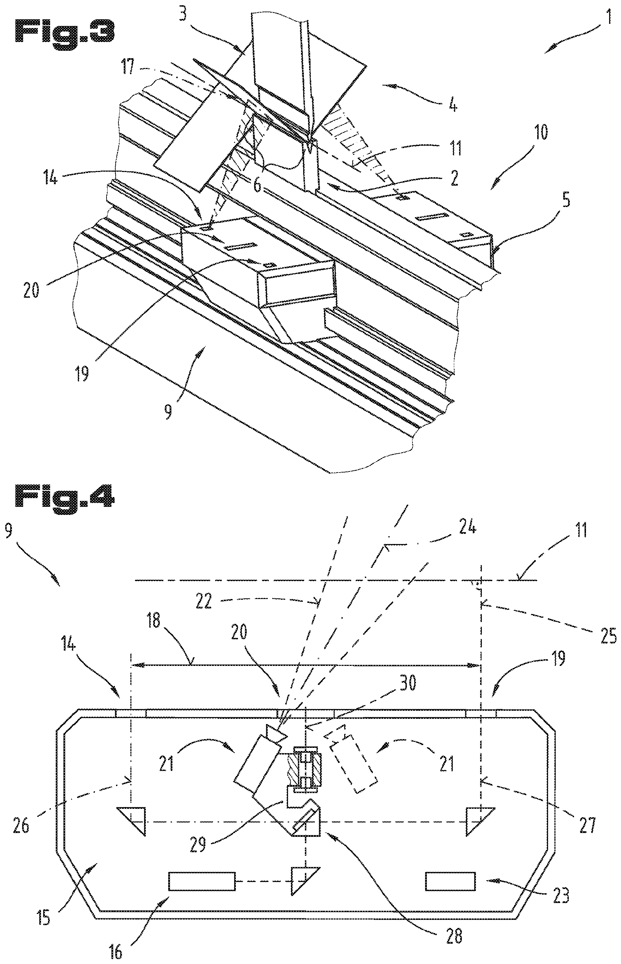

Die Fig. 2 zeigt die Biegevorrichtung 1 gemäß Fig. 1 perspektivisch dargestellt. Die - gemäß Darstellung linksseitig - am Tischbalken 5 befestigte Biegewinkel-Messvorrichtung 9 weist an einer dem Werkstück 4 bzw. der Anordnung der Biegewerkzeuge zugewandten Seite eine erste Austrittsöffnung 14 einer Beleuchtungsvorrichtung 15 (Fig. 4) auf. Durch diese erste Austrittsöffnung 14 kann Licht einer Lichtquelle 16 (Fig. 4) der Beleuchtungsvorrichtung 15 auf die Unterseite des linken Schenkels des Werkstücks 4 gerichtet werden, dass auf diesem eine Lichtlinie 17 erscheint. Die Biegewinkel-Messvorrichtung 9 weist außerdem noch eine zweite Austrittsöffnung 19 der Beleuchtungsvorrichtung 15 auf, die in Richtung parallel zu der Längserstreckung 11 des Tischbalkens 5 um einen Abstand 18 gegenüber der ersten Austrittsöffnung 14 versetzt ist. Schließlich ist zwischen der ersten Austrittsöffnung 14 und der zweiten Austrittsöffnung 19 der Biegewinkel-Messvorrichtung 9 ein Fenster 20 einer Kamera 21 ausgebildet. Die Kamera 21 bzw. ein Sehfeld 22 der Kamera 21 ist dabei derart ausgerichtet, dass die auf dem Werkstück 4 erscheinende Lichtlinie 17 erfasst werden kann. Die erste und die zweite Austrittsöffnung 14, 19 der Beleuchtungsvorrichtung 15 sind somit symmetrisch bezüglich dem Fenster 20 der Kamera 21 angeordnet. Zur Messung des Biegewinkels 7 des linken Schenkels des Werkstücks 4 können die erste Austrittsöffnung 14 und die zweite Austrittsöffnung 19 zur Erzeugung der Lichtlinie 17 bzw. einer in Längsrichtung versetzten alternativen Lichtlinie (nicht dargestellt) wahlweise benutzt werden.

Entsprechend der Versetzung der beiden Austrittsöffnungen 14, 19 relativ zu dem Fenster 20 der Kamera 21 schließen die auf die Lichtlinie 17 gerichteten Lichtstrahlen und eine optische Achse 24 des Sehfelds 22 bzw. der Kamera 21 einen spitzen Winkel relativ zueinander ein. Wird nun eine Biegeumformung an dem Werkstück 4 durch Zusammendrücken des Stempels 3 und der Matrize 2 ausgeführt, so ändert sich wegen des dabei erfolgenden Verschwenkens des entsprechenden Schenkels des Werkstücks 4 auch die räumliche Lage der Lichtlinie 17. In von der Kamera 21 aufgezeichneten Bildern erscheint diese räumliche Änderung der Lichtlinie 17 als eine Veränderung der Lage und Ausrichtung des Bildes der Lichtlinie 17. Auf der Grundalge dieser Veränderungen des Bildes der Lichtlinie 17 kann schließlich der Biegewinkel 7 bestimmt werden. Die Biegewinkel-Messvorrichtung 9 umfasst vorzugsweise auch eine Steuervorrichtung 23, in der eine Auswerteeinheit für die von der Kamera 21 aufgezeichneten Bilder ausgebildet ist. In der Auswerteeinheit der Steuervorrichtung 23 wird, vorzugsweise unter Verwendung einer Bilderkennungssoftware, die Lage- und Richtungsänderung des Bildes der Lichtlinie 17 bestimmt und wird daraus der Biegewinkel 7 berechnet.

Die aus der ersten Austrittsöffnung 14 auf das Werkstück 4 hin ausgesandten Lichtstrahlen sind als fächerartiges, schmales Lichtbündel geformt, sodass durch dieses eine Ebene 25 bestimmt ist, die vorzugsweise senkrecht relativ zu der Längserstreckung 11 des Tischbalkens 5 bzw. der Biegeachse des Werkstücks 4 gerichtet ist (Fig. 4).

In dem Anwendungsfall einer Biegeumformung, wie sie anhand des Werkstücks 4 in Fig. 2 dargestellt ist, kann mit der erfindungsgemäßen Biegewinkel-Messvorrichtung 9 an zwei voneinander unterschiedlichen Stellen des Werkstücks 4 eine Messung des Biegewinkels 7 durchgeführt werden. Dazu wird der Biegewinkel 7 unter Verwendung der ersten Austrittsöffnung 14 oder unter Verwendung der zweiten Austrittsöffnung 19 gemessen. Bei der Biegeumformung des Werkstücks 4, wie in Fig. 2 dargestellt, bei der eine sich über die gesamte Breite (in Richtung der Längsrichtung 11 des Tischbalkens 5) erstreckende Biegekante 6 gebildet wird, sind die Messungen unter Verwendung der ersten Austrittsöffnung 14 oder der zweiten Austrittsöffnung 19 in gleicher Weise durchführbar, ohne dass die Biegewinkel-Messvorrichtung 9 dazu verschoben werden muss.

Als besonders vorteilhaft erweist sich die Biegewinkel-Messvorrichtung 9 im Falle von Biegeumformungen des Werkstücks 4, bei denen nur abschnittsweise, das heißt nur über Teilbereiche der Längsrichtung 11, eine Biegekante 6 erzeugt wird.

Die Fig. 3 zeigt die Biegevorrichtung 1 bei der Ausführung der Biegeumformung in einem alternativen Anwendungsfall, perspektivisch dargestellt. Die dargestellte Situation zeigt eine Biegeumformung an einem Werkstück 4, an dem in einem vorangegangenen Bearbeitungsschritt bereits ein von einem Rand zur Mitte hin gerichteter Schnitt ausgeführt worden ist. Das Werkstück 4 ist derart zwischen Matrize 2 und Stempel 3 eingelegt, dass nun eine sich nur über einen Teilbereich erstreckende Biegekante 6 erzeugt wird, während ein sich über die Länge der Biegekante 6 hinaus erstreckender Teil des Werkstücks 4 seine unverformte, ebene Gestalt behält. Der - in der Darstellung - hinter dem Stempel 3 befindliche Schenkel des Werkstücks 4 wird durch den Biegevorgang zur Gänze nach oben hin verschwenkt, während dies bei dem vor der Biegewerkzeuganordnung befindlichen Schenkel des Werkstücks 4 nur für den vorderen (im Bildvordergrund der Fig. 3 befindlichen), von der Biegekante 6 abstehenden Teil des Werkstücks 4 zutrifft. Zwar könnte die Lichtlinie 17 auch unter Verwendung der zweiten Austrittsöffnung 19 erzeugt werden, es zeigt sich aber, dass dazu die Messvorrichtung 9 an der Geradführung 12 des Tischbalkens 5 in eine Position verschoben werden müsste, in der das Fenster 20 der Kamera 21 von dem nach unten verschwenkten Teilbereich des Werkstücks 4 verdeckt werden würde. Die Lichtlinie 17 könnte in einer solchen Situation nicht mehr in dem Sehfeld 22 der Kamera 21 erfasst werden. In diesem Anwendungsfall einer Biegeumformung ist es daher von Vorteil, dass wahlweise zwischen der Verwendung der ersten Austrittsöffnung 14 und der zweiten Austrittsöffnung 19 zur Erzeugung der Lichtlinie 17 gewechselt werden kann. Bei der dargestellten Positionierung der Biegewinkelmessvorrichtung 9 kann die Messung des Biegewinkels 7 durch die erste Austrittsöffnung 14 und die Kamera 21 ungehindert erfolgen.

Die Fig. 4 zeigt einen Querschnitt der Biegewinkelmessvorrichtung 9 gemäß Fig. 1. Die zur Erzeugung der Lichtlinie 17 (Fig. 2, 3) vorgesehenen Austrittsöffnungen 14, 19 sind um den Abstand 18 in Richtung parallel zu der Längserstreckung 11 des Tischbalkens 5 versetzt angeordnet. Das Licht der Lichtquelle 16 der Beleuchtungsvorrichtung 15 kann wahlweise über einen ersten Beleuchtungsstrahlengang 26 durch die erste Austrittsöffnung 14 oder über einen zweiten Beleuchtungsstrahlengang 27 durch die zweite Austrittsöffnung 19 auf das Werkstück 4 gerichtet werden. Das heißt, die Beleuchtungsvorrichtung 15 weist eine schaltbare Strahlführung auf, wodurch zwischen einem ersten, vor der ersten Austrittsöffnung 14 liegenden Messfeld und einem zweiten, vor der zweiten Austrittsöffnung 19 liegenden Messfeld umgeschaltet werden kann. Dazu umfasst die Beleuchtungsvorrichtung 15 ein schwenkbar gelagertes Umlenkprisma 28, mit dem das von der Lichtquelle 16 kommende Licht wahlweise in einen der werkstückseitigen Strahlengangabschnitte, d.h. entweder in den ersten, werkstückseitigen Beleuchtungsstrahlengang 26 oder in den zweiten Beleuchtungsstrahlengang 27, umgelenkt werden kann. In der in Fig. 4 dargestellten Situation wird das Licht der Lichtquelle 16 über den zweiten Beleuchtungsstrahlengang 27 durch die zweite Austrittsöffnung 19 hindurch (gemäß der Darstellung durch die rechte der beiden Austrittsöffnungen 14, 19) auf das Werkstück 4 abgestrahlt. Dementsprechend wird auch die Kamera 21 mit ihrer optischen Achse 24 auf den entsprechenden, räumlichen Bereich der Lichtlinie 17 hin ausgerichtet (gemäß der Darstellung nach rechts).

Als Lichtquelle 16 wird vorzugsweise ein Laser verwendet. Ein solcher eignet sich besonders, um damit ein fächerartiges, schmales Lichtbündel zu bilden, das - auf die Oberfläche des Werkstücks 4 gerichtet - die gewünschte Lichtlinie 17 erzeugt. Das durch eine der beiden Austrittsöffnungen 14, 19 auf das Werkstück 4 gerichtete schmale Lichtbündel entspricht annähernd der Ebene 25. Dieses schmale Lichtbündel bzw. die diesem entsprechende Ebene 25 ist senkrecht bezüglich der Biegeachse bzw. senkrecht bezüglich der Längserstreckung 11 des Tischbalkens 5 ausgerichtet.

Bei diesem Ausführungsbeispiel sind das Umlenkprisma 28 und die Kamera 21 an einem gemeinsamen Drehrahmen 29 befestigt. Dieser Drehrahmen 29 ist bezüglich einer zu der Längserstreckung 11 des Tischbalkens 5 senkrechten Achse 30 verschwenkbar gelagert. Das Ändern der Ausrichtung des Umlenkprismas 28 als auch der Kamera 21 kann somit gleichzeitig durch Verschwenken des Drehrahmen 29 um 180° erfolgen. Gemäß der Darstellung in Fig. 4 wird damit von der zweiten Austrittsöffnung 19 der Beleuchtungsvorrichtung 15 zu der ersten Austrittsöffnung 14 gewechselt und die Ausrichtung der Kamera 21 auf das zweite Messfeld hin zur Ausrichtung auf das erste Messfeld hin geändert.

Ein Verschwenken des Drehrahmens 29 um 180° ändert also die Lage und Ausrichtung der Kamera 21 in die durch strichlierte Linien dargestellte Lage und leitet das von der Lichtquelle 16 kommende Licht in den ersten, werkstückseitigen Beleuchtungsstrahlengang 26, hin zu der ersten Austrittsöffnung 14.

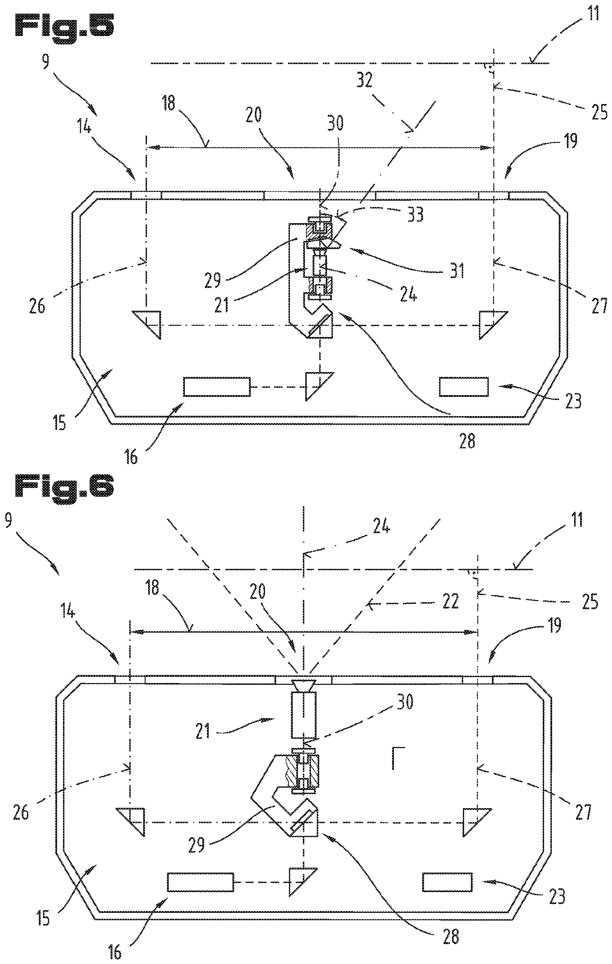

In der Fig. 5 ist eine weitere und gegebenenfalls für sich eigenständige Ausführungsform der Biegewinkelmessvorrichtung 9 bzw. der Biegevorrichtung 1 gezeigt, wobei wiederum für gleiche Teile gleiche Bezugszeichen bzw. Bauteilbezeichnungen wie in den vorangegangenen Fig. 1 bis 4 verwendet werden. Um unnötige Wiederholungen zu vermeiden, wird auf die detaillierte Beschreibung in den vorangegangenen Fig. 1 bis 4 hingewiesen bzw. Bezug genommen.

Die Fig. 5 zeigt ein alternatives Ausführungsbeispiel der Biegewinkelmessvorrichtung 9 der Biegevorrichtung 1, ebenfalls dargestellt als Querschnitt, wie in Fig. 1 angezeigt. Die Kamera 21 ist dabei koaxial zu der Achse 30 des Drehrahmens 29 ausgerichtet und feststehend montiert. Gemäß diesem Ausführungsbeispiel ist an dem Drehrahmen 29 auch ein zweites Umlenkprisma 31 angeordnet. Das zweite Umlenkprisma 31 ist der Kamera 21 vorgesetzt und ist so positioniert, dass ein Strahlengang 32 der Kamera 21 bzw. das Sehfeld 22 um einen Winkel 33 gegenüber der Achse 30 geneigt ist. Durch Verschwenken des Drehrahmens 29 um 180° kann nun ebenfalls zwischen der Verwendung der ersten Austrittsöffnung 14 und Verwendung der zweiten Austrittsöffnung 19, d.h. zwischen einer Messung unter Verwendung des ersten oder des zweiten Messfeldes gewechselt werden.

Die Fig. 6 zeigt noch ein weiteres alternatives Ausführungsbeispiel der Biegewinkelmessvorrichtung 9. Dabei ist die Kamera 21 unter dem Fenster 20 feststehend angeordnet, wobei ihre optische Achse 24 fluchtend zu der Achse 30 ausgerichtet ist. Die Kamera 21 gemäß diesem Ausführungsbeispiel umfasst ein Weitwinkelobjektiv, sodass ihr Sehfeld 22 die Lichtlinie 17 in beiden Messsituationen, das heißt bei Verwendung der Austrittsöffnung 14 als auch bei Verwendung der Austrittsöffnung 19 zur Erzeugung der Lichtlinie 17, erfassen kann. Bei diesem Ausführungsbeispiel der Biegewinkelmessvorrichtung 9 braucht nur das Umlenkprisma 28 an dem Drehrahmen 29 befestigt und mit diesem verschwenkbar zu sein.

Der Schutzbereich ist durch die Ansprüche bestimmt.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

| | | | |
|---|---|---|---|
| 1 | Biegevorrichtung | 31 | Umlenkprisma |
| 2 | Matrize | 32 | Strahlengang |
| 3 | Stempel | 33 | Winkel |
| 4 | Werkstück | | |
| 5 | Tischbalken | | |
| 6 | Biegekante | | |
| 7 | Winkel | | |
| 8 | Winkel | | |
| 9 | Biegewinkel-Messvorrichtung | | |
| 10 | Biegewinkel-Messvorrichtung | | |
| 11 | Längsrichtung | | |
| 12 | Geradführung | | |
| 13 | Geradführung | | |
| 14 | Austrittsöffnung | | |
| 15 | Beleuchtungsvorrichtung | | |
| 16 | Lichtquelle | | |
| 17 | Lichtlinie | | |
| 18 | Abstand | | |
| 19 | Austrittsöffnung | | |
| 20 | Fenster | | |
| 21 | Kamera | | |
| 22 | Sehfeld | | |
| 23 | Steuervorrichtung | | |
| 24 | optische Achse | | |
| 25 | Ebene | | |
| 26 | Beleuchtungsstrahlengang | | |
| 27 | Beleuchtungsstrahlengang | | |
| 28 | Umlenkprisma | | |
| 29 | Drehrahmen | | |
| 30 | Achse | | |

## Patentansprüche

1. Biegevorrichtung (1) zur Herstellung eines Bauteils durch Umformung eines Werkstücks (4) aus Blech mit zwei parallel zueinander ausgerichteten Pressbalken und daran befestigten Biegewerkzeugen (2, 3), mit einer Steuervorrichtung (23) und mit einer Messvorrichtung (9, 10) zur Bestimmung eines Biegewinkels (7, 8) des Werkstücks (4) bezüglich einer Biegeachse (6), wobei die Messvorrichtung (9, 10) eine Beleuchtungsvorrichtung (15) zur Erzeugung einer Lichtlinie (17) auf dem Werkstück (4) und eine Kamera (21) zum Aufzeichnen eines Bildes der Lichtlinie (17) umfasst, und wobei die Kamera (21) und eine erste Austrittsöffnung (14) der Beleuchtungsvorrichtung (15) in Richtung parallel bezüglich der Biegeachse (6) voneinander distanziert angeordnet sind, und wobei die Steuervorrichtung mit einem Bilderkennungsprogramm ausgebildet ist, sodass aus einer Änderung des Bildes der Lichtlinie (17) in Bildern der Kamera (21) ein Wert des Biegewinkels (7, 8) bestimmbar ist, wobei die Beleuchtungsvorrichtung (15) eine zweite Austrittsöffnung (19) zur Erzeugung einer zweiten Lichtlinie auf dem Werkstück (4) umfasst, wobei die erste Austrittsöffnung (14) und die zweite Austrittsöffnung (19) der Beleuchtungsvorrichtung (15) in Richtung parallel bezüglich der Biegeachse (6) voneinander distanziert angeordnet sind, und wobei die Kamera (21) zwischen der ersten Austrittsöffnung (14) und der zweiten Austrittsöffnung (19) angeordnet ist, **dadurch gekennzeichnet, dass** die Beleuchtungsvorrichtung (15) eine Lichtquelle (16) und eine Umlenkvorrichtung (28) für Licht der Lichtquelle (16) umfasst, wobei die Umlenkvorrichtung (28) dazu ausgebildet ist, das Licht der Lichtquelle (16) wahlweise durch einen ersten Beleuchtungs-Strahlengang (26) und die erste Austrittsöffnung (14) oder durch einen zweiten Beleuchtungs-Strahlengang (27) und die zweite Austrittsöffnung (19) zu führen.

2. Biegevorrichtung (1) nach Anspruch 1, **dadurch gekennzeichnet, dass** die Messvorrichtung (9, 10) ein Fenster (20) für die Kamera (21) umfasst, wobei die erste Austrittsöffnung (14) und die zweite Austrittsöffnung (19) symmetrisch bezüglich des Fensters (20) angeordnet sind.

3. Biegevorrichtung (1) nach Anspruch 1 oder 2, **dadurch gekennzeichnet, dass** durch die Austrittsöffnung (14, 19) der Beleuchtungsvorrichtung (15) und die Lichtlinie (17) eine Ebene (25) bestimmt ist, die senkrecht bezüglich der Biegeachse (6) ausgerichtet ist.

4. Biegevorrichtung (1) nach einem der vorhergehenden Ansprüche, **dadurch gekennzeichnet, dass** die Messvorrichtung (9, 10) einen Drehrahmen (29) umfasst, wobei die Umlenkvorrichtung (28) für das Licht der Lichtquelle (16) an dem Drehrahmen (29) befestigt und mit diesem um eine Achse (30) verschwenkbar ist.

5. Biegevorrichtung (1) nach einem der vorhergehenden Ansprüche, **dadurch gekennzeichnet, dass** die Umlenkvorrichtung (28) einen Planspiegel umfasst.

6. Biegevorrichtung (1) nach einem der Ansprüche 1 bis 4, **dadurch gekennzeichnet, dass** die Umlenkvorrichtung (28) ein Prisma umfasst.

7. Biegevorrichtung (1) nach einem der Ansprüche 4 bis 6, **dadurch gekennzeichnet, dass** die Kamera (21) an dem Drehrahmen (29) befestigt und mit diesem um die Achse (30) verschwenkbar ist, wobei die Achse (30) senkrecht bezüglich der Biegeachse (6) ausgerichtet ist.

8. Biegevorrichtung (1) nach einem der Ansprüche 4 bis 7, **dadurch gekennzeichnet, dass** ein Umlenkprisma (31) zur Umlenkung des Strahlengangs (32) der Kamera (21) an dem Drehrahmen (29) befestigt ist, wobei die Kamera (21) koaxial zu der Achse (30) des Drehrahmens (29) ausgerichtet ist.

9. Biegevorrichtung (1) nach einem der Ansprüche 3 bis 8, **dadurch gekennzeichnet, dass** eine Richtung eines Strahlengangs (32) der Kamera (21) und die Ebene (25) der Lichtlinie (17) einen spitzen Winkel (33) einschließen.

10. Biegevorrichtung (1) nach einem der Ansprüche 1 bis 6, **dadurch gekennzeichnet, dass** die Kamera (21) ein Weitwinkelobjektiv umfasst und feststehend angeordnet ist, wobei eine Richtung eines Strahlengangs (32) der Kamera (21) parallel zu der Ebene (25) der Lichtlinie (17) ausgerichtet ist.

11. Biegevorrichtung (1) nach einem der vorhergehenden Ansprüche, **dadurch gekennzeichnet, dass** eine Geradführung (12, 13) umfasst ist und die Messvorrichtung (9, 10) für den Biegewinkel (7, 8) an der Geradführung (12, 13) in einer Richtung parallel zu der Biegeachse verstellbar ist.

## Claims

1. A bending device (1) for producing a component by forming a workpiece (4) from sheet metal, having two press beams aligned parallel to one another and bending tools (2, 3) attached thereto, having a controller (23) and having a measuring device (9, 10) for determining a bending angle (7, 8) of the workpiece (4) with respect to a bending axis (6), wherein the measuring device (9, 10) comprises a lighting device (15) for generating a light line (17) on the workpiece (4) and a camera (21) for recording an image of the light line (17), and wherein the camera (21) and a first exit opening (14) of the lighting device (15) are arranged spaced apart from each other in the direction parallel with respect to the bending axis (6), and wherein the controller is formed with an image recognition program so that from a change of the image of the light line (17) in images of the camera (21) a value of the bending angle (7, 8) can be determined, wherein the lighting device (15) comprises a second exit opening (19) for generating a second light line on the workpiece (4), wherein the first exit opening (14) and the second exit opening (19) of the lighting device (15) are arranged at a distance from one another in the direction parallel with respect to the bending axis (6), and wherein the camera (21) is arranged between the first exit opening (14) and the second exit opening (19), **characterized in that** the lighting device (15) comprises a light source (16) and a deflection device (28) for light from the light source (16), wherein the deflection device (28) is configured to guide the light from the light source (16) either through a first lighting beam path (26) and the first exit opening (14), or through a second lighting beam path (27) and the second exit opening (19).

2. The bending device (1) according to claim 1, **characterized in that** the measuring device (9, 10) comprises a window (20) for the camera (21), wherein the first exit opening (14) and the second exit opening (19) are arranged symmetrically with respect to the window (20).

3. The bending device (1) according to claim 1 or 2, **characterized in that** a plane (25), which is oriented perpendicularly with respect to the bending axis (6), is determined by the exit opening (14, 19) of the lighting device (15) and the light line (17).

4. The bending device (1) according to one of the preceding claims, **characterized in that** the measuring device (9, 10) comprises a rotating frame (29), wherein the deflecting device (28) for the light of the light source (16) is fixed to the rotating frame (29) and is pivotable therewith about an axis (30).

5. The bending device (1) according to one of the preceding claims, **characterized in that** the deflection device (28) comprises a plane mirror.

6. The bending device (1) according to one of claims 1 to 4, **characterized in that** the deflection device (28) comprises a prism.

7. The bending device (1) according to one of claims 4 to 6, **characterized in that** the camera (21) is fixed to the rotating frame (29) and is pivotable therewith about the axis (30), wherein the axis (30) is oriented perpendicularly with respect to the bending axis (6).

8. The bending device (1) according to one of claims 4 to 7, **characterized in that** a deflecting prism (31) for deflecting the beam path (32) of the camera (21) is fixed to the rotating frame (29), wherein the camera (21) is oriented coaxially with respect to the axis (30) of the rotating frame (29).

9. The bending device (1) according to one of claims 3 to 8, **characterized in that** a direction of a beam path (32) of the camera (21) and the plane (25) of the light line (17) enclose an acute angle (33).

10. The bending device (1) according to one of claims 1 to 6, **characterized in that** the camera (21) comprises a wide-angle lens and is fixedly arranged, wherein a direction of a beam path (32) of the camera (21) is oriented parallel to the plane (25) of the light line (17).

11. The bending device (1) according to one of the preceding claims, **characterized in that** a linear guide (12, 13) is comprised and the measuring device (9, 10) for the bending angle (7, 8) is adjustable on the linear guide (12, 13) in a direction parallel to the bending axis.

## Revendications

1. Dispositif de pliage (1) permettant de produire un élément par formage d'une pièce (4) en tôle, avec deux barres de pression orientées parallèlement l'une à l'autre et des outils de pliage (2, 3) fixés au niveau de celles-ci, avec un dispositif de commande (23) et avec un dispositif de mesure (9, 10) permettant de définir un angle de pliage (7, 8) de la pièce (4) par rapport à un axe de pliage (6), dans lequel le dispositif de mesure (9, 10) comprend un dispositif d'éclairage (15) permettant de générer une ligne lumineuse (17) sur la pièce (4) et une caméra (21) permettant d'enregistrer une image de la ligne lumineuse (17), et dans lequel la caméra (21) et un premier orifice de sortie (14) du dispositif d'éclairage (15) sont agencés à distance l'un de l'autre dans une direction parallèle à l'axe de pliage (6), et dans lequel le dispositif de commande est muni d'un programme de reconnaissance d'images de sorte qu'une valeur de l'angle de pliage (7, 8) peut être définie à partir d'une modification de l'image de la ligne lumineuse (17) dans les images de la caméra (21), dans lequel le dispositif d'éclairage (15) comprend un second orifice de sortie (19) permettant de générer une seconde ligne lumineuse sur la pièce (4), dans lequel le premier orifice de sortie (14) et le second orifice de sortie (19) du dispositif d'éclairage (15) sont agencés à distance l'un de l'autre dans une direction parallèle à l'axe de pliage (6), et dans lequel la caméra (21) est agencée entre le premier orifice de sortie (14) et le second orifice de sortie (19), **caractérisé en ce que** le dispositif d'éclairage (15) comprend une source de lumière (16) et un dispositif de déviation (28) destiné à la lumière de la source de lumière (16), dans lequel le dispositif de déviation (28) est conçu pour guider la lumière de la source de lumière (16) de manière sélective à travers un premier trajet de faisceau d'éclairage (26) et le premier orifice de sortie (14) ou à travers un second trajet de faisceau d'éclairage (27) et le second orifice de sortie (19).

2. Dispositif de pliage (1) selon la revendication 1, **caractérisé en ce que** le dispositif de mesure (9, 10) comprend une fenêtre (20) destinée à la caméra (21), dans lequel le premier orifice de sortie (14) et le second orifice de sortie (19) sont agencés de manière symétrique par rapport à la fenêtre (20).

3. Dispositif de pliage (1) selon la revendication 1 ou 2, **caractérisé en ce qu'**un plan (25) orienté perpendiculairement à l'axe de pliage (6) est défini grâce à l'orifice de sortie (14, 19) du dispositif d'éclairage (15) et à la ligne lumineuse (17).

4. Dispositif de pliage (1) selon l'une quelconque des revendications précédentes, **caractérisé en ce que** le dispositif de mesure (9, 10) comprend un châssis rotatif (29), dans lequel le dispositif de déviation (28) destiné à la lumière de la source de lumière (16) est fixé au châssis rotatif (29) et peut pivoter avec celui-ci autour d'un axe (30).

5. Dispositif de pliage (1) selon l'une quelconque des revendications précédentes, **caractérisé en ce que** le dispositif de déviation (28) comprend un miroir plan.

6. Dispositif de pliage (1) selon l'une quelconque des revendications 1 à 4, **caractérisé en ce que** le dispositif de déviation (28) comprend un prisme.

7. Dispositif de pliage (1) selon l'une quelconque des revendications 4 à 6, **caractérisé en ce que** la caméra (21) est fixée au châssis rotatif (29) et peut pivoter avec celui-ci autour de l'axe (30), dans lequel l'axe (30) est orienté perpendiculairement à l'axe de pliage (6).

8. Dispositif de pliage (1) selon l'une quelconque des revendications 4 à 7, **caractérisé en ce qu'**un prisme de déviation (31) permettant de dévier le trajet optique (32) de la caméra (21) est fixé au châssis rotatif (29), dans lequel la caméra (21) est orientée de manière coaxiale par rapport à l'axe (30) du châssis rotatif (29).

9. Dispositif de pliage (1) selon l'une quelconque des revendications 3 à 8, **caractérisé en ce que** la direction du trajet optique (32) de la caméra (21) et le plan (25) comprenant la ligne lumineuse (17) forment un angle aigu (33).

10. Dispositif de pliage (1) selon l'une quelconque des revendications 1 à 6, **caractérisé en ce que** la caméra (21) comprend un objectif grand angle et est agencée de manière fixe, dans lequel la direction du trajet optique (32) de la caméra (21) est orientée parallèlement au plan (25) comprenant la ligne lumineuse (17).

11. Dispositif de pliage (1) selon l'une quelconque des revendications précédentes, **caractérisé en ce qu'**il comprend un guidage rectiligne (12, 13) et le dispositif de mesure (9, 10) de l'angle de pliage (7, 8) peut être ajusté au niveau du guidage rectiligne (12, 13) dans une direction parallèle à l'axe de pliage.
